# EUROPÄISCHE PATENTSCHRIFT

(11) **EP 1 774 389 B1**
(45) Veröffentlichungstag und Bekanntmachung des Hinweises auf die Patenterteilung: **18.06.2014**
(21) Anmeldenummer: 05775864.1
(22) Anmeldetag: 04.08.2005
(51) Int. Cl.: G02B 21/34, G01N 21/03

(54) **VORRICHTUNG ZUM AUFNEHMEN EINER MESSPROBE**
DEVICE FOR RECEIVING A TEST SAMPLE
DISPOSITIF POUR RECEVOIR UN ECHANTILLON D'ESSAI

(30) Priorität: 05.08.2004 DE 202004012394 U
(43) Veröffentlichungstag der Anmeldung: 18.04.2007
(73) Patentinhaber: JPK Instruments AG, 12435 Berlin (DE)
(72) Erfinder: SÜNWOLDT, Olaf, 12055 Berlin (DE); KNEBEL, Detlef, 12305 Berlin (DE)
(74) Vertreter: Bittner, Thomas L.
(86) Internationale Anmeldenummer: PCT/DE2005/001395
(87) Internationale Veröffentlichungsnummer: WO 2006/012893

(56) Entgegenhaltungen:
- EP-A2- 0 436 338
- WO-A-02/084210
- US-A- 3 620 596
- US-A- 4 441 793
- US-A- 4 974 952
- US-A- 5 173 261
- US-A- 5 675 154
- US-A- 6 153 426
- US-A1- 2002 154 399
- US-B1- 6 233 093
- PATENT ABSTRACTS OF JAPAN Bd. 1999, Nr. 13, 30. November 1999 (1999-11-30) & JP 11 206366 A (MATSUNAMI GLASS KOGYO KK), 3. August 1999 (1999-08-03)

## Beschreibung

Die Erfindung betrifft eine Vorrichtung zum Aufnehmen einer Meßprobe, insbesondere Probenhalter, für eine kombinierte Untersuchung der Meßprobe mit einem Meßverfahren und einem anderen Meßverfahren, welches von dem Meßverfahren verschieden ist.

### Stand der Technik

Die Rastersondenmikroskopie (SPM - "scanning probe microscopy") ist eine Methode zur Messung von Oberflächeneigenschaften, beispielsweise der Topologie. Es können auch Volumeneigenschaften nahe der Oberfläche ermittelt werden wie zum Beispiel die Elastizität einer Meßprobe. Vielfach leidet die Rastersondenmikroskopie darunter, daß keine chemischen Eigenschaften der Meßprobe ermittelt werden können. Deshalb sind zum Beispiel optische Methoden als ergänzende Untersuchungsmethoden sehr nützlich. Die Fluoreszenzmikroskopie kann zum Beispiel bei geeigneter Präparation der Meßprobe eine Aussage treffen, wo sich ein Molekül oder eine Gruppe von Molekülen aufhält. Die laterale Auflösung dieser optischen Methode ist viel geringer als in der Rastersondenmikroskopie, sollte aber zumindest so hoch eingestellt werden, wie es technisch möglich ist. Die Nahfeldmikroskopie (SNOM - "scanning nearfield optical microscopy" eine Unterart des Rastersondenmikroskopie, wäre hierzu zwar prinzipiell auch in der Lage, aber die Anwendung ist doch vielfach noch komplizierter und zudem liefert die optische Lösung auch Informationen aus tieferen Probenschichten.

Für eine Kombination der Untersuchungsmethoden ist es oft geeignet, eine Entkopplung derart vorzunehmen, daß ein inverses Mikroskop genommen wird und das SPM von oben adaptiert wird. Hierdurch können beide Methoden wie gewohnt betrieben werden. Es ist von großem Vorteil, wenn ein Sondenscanner verwendet wird, nämlich ein Gerät, daß in allen drei zu bewegenden Raumrichtungen eine Sonde bewegt, wobei die zu untersuchende Meßprobe in Ruhe ist. Die Meßprobe selbst und ihre Umgebung, beispielsweise der Probenträger, bilden eine Schnittstelle.

Um die Fluoreszenzmikroskopie zu optimieren, muß die Meßprobe auf einem Standard Deckgläschen präpariert sein, da hierauf die zur Mikroskopie genutzten Standard-Objektive optimiert sind. Neben der Fluoreszenzmikroskopie gibt es noch andere optische Methoden, die eine hohe Auflösung bieten und für den optimalen Einsatz ein Deckgläschen als Probenträger benötigen. Alle diese Methoden werden ganz allgemein im folgenden "optische Methoden" genannt.

Eine sehr einfache und allgemein anerkannte Implementierung einer Vorrichtung zur Aufnahme einer zu untersuchenden Meßprobe, die auch als Flüssigkeitszelle bezeichnet wird, besteht darin, ein Deckgläschen von unten an eine Petrischale mit einem Loch zu kleben, so daß die Meßprobe von oben auf das Deckgläschen präpariert ist und so für die Rastersondenmikroskopie zugänglich ist, ohne das eine Einschränkung hinsichtlich der gleichzeitigen Nutzbarkeit der optischen Methode zur Untersuchung der Meßprobe besteht.

Neben der optischen Zugänglichkeit über ein Deckgläschen ist es für die meisten Experimente interessant, daß in Wasser gemessen werden kann, wobei hier die Einstellung der Temperatur und der Austausch von Flüssigkeit, beispielsweise zur Einstellung des pH-Wertes, sehr wichtig ist. Sollen Zellen untersucht werden, so ist zudem die Zugabe von CO₂ als Puffer sehr wichtig, um zumindest für einen gewissen Zeitraum lebensfähige Bedingungen zu schaffen.

Für alle diese Anforderungen gibt es bekannte Lösungen, die teilweise auch in kommerziellen Geräten vereint sind. Der Aufbau einer solchen Vorrichtung zur Aufnahme der Meßprobe ist aber aufwendig, weil zum Beispiel mehrere Bauteile in geeigneter Weise anzuordnen und zusammenzuschrauben sind. Der Zugang mit einem Rastersondenmikroskop von oben ist möglich, allerdings gibt es Einschränkungen, die nicht akzeptabel sind. So ist es nicht möglich, die potentiell hohe laterale und vertikale Auflösung des Rastersondenmikroskops auf einem kommerziellen Gerät zu erzielen; insbesondere bei der Messung in einem flüssigen Medium wie zum Beispiel Wasser oder Puffer. Ein weiteres sehr großes Problem ist die thermische Drift, wobei insbesondere eine zur Meßprobe vertikale Drift dazu führen kann, daß der relativ kleine Scanbereich eines Rastersondenmikroskops, welcher zum Beispiel 15µm beträgt, überschritten wird und die zur Messung verwendete Sonde entweder den Kontakt zur Meßprobe verliert oder sogar mit der Meßprobe kollidiert. Die thermische Drift in der Probenebene ist auch problematisch, denn es ist insbesondere dann schwierig eine Probenstelle wiederzufinden, wenn sich die Meßprobe durch eine Temperaturänderung stark verändert.

Das Dokument JP 11 206366 A offenbart eine Mikroskopplatte, bei der ein Präparationsbauteil in einer Aufnahme gelagert ist und auf einer Vorderseite des Präparationsbauteils ein umlaufendes Zylinderbauteil angeordnet ist.

Im Dokument WO 02/084210 A1 ist ein Rastersondenmikroskop beschrieben, welches einen Probenhalter aufweist, bei dem eine zu untersuchende Probe in einem Flüssigkeitsmedium angeordnet werden kann.

Das Dokument US 6,233,093 B1 offenbart eine Temperatursteuereinheit mit Mitteln zum Beobachten von Messproben unter dem Mikroskop bei sich stark ändernden Temperaturen. Die Temperatursteuereinheit ist konfiguriert, eine Messprobe von der Umgebungstemperaturen zu isolieren.

Im Dokument US 3,602,596 ist eine Mikroskopplatte beschrieben, bei der ein zur Auflage der Messprobe dienendes Bauteil randseitig gelagert ist.

In dem Dokument US 4,974,952 ist eine Messzellenanordnung offenbart, bei der zur Aufnahme einer Fluidmessprobe eine Durchflusszelle zwischen einem Deckbauteil und einem Bodenbauteil gebildet ist.

Das Dokument EP 0 436 338 A21 beschreibt eine druckunabhängige Probenzelle, die zur Aufnahme von Infrarotabsorptionsspektren geeignet ist.

### Die Erfindung

Aufgabe der Erfindung ist es, eine im Aufbau einfache und bei der Nutzung bequem zu handhabende Vorrichtung zum Aufnehmen einer Meßprobe, insbesondere Probenhalter, für eine kombinierte Untersuchung der Meßprobe mit einem Meßverfahren und einem anderen Meßverfahren, welches von dem Meßverfahren verschieden ist, zu schaffen. Des weiteren soll eine geringe Driftstrecke zwischen der Meßprobe und insbesondere einer Sonde eines Rastersondenmikroskops auch gewährleistet sein, wenn die Meßprobe in einem flüssigen Medium abgebildet wird, dessen Temperatur eingestellt werden kann.

Diese Aufgabe wird erfindungsgemäß durch eine Vorrichtung nach dem unabhängigen Anspruch 1 gelöst. Vorteilhafte Ausgestaltungen der Erfindung sind Gegenstand von abhängigen Unteransprüchen.

Mit Hilfe der vorgeschlagenen Vorrichtung kann die Meßprobe mit zwei unterschiedliche Meßverfahren untersucht werden, wobei mit Hilfe des Stütz- und Abdeckelementes ein ursprünglich zur Verfügung stehender Flächenbereich des Präparationsbauteils auf eine für die Untersuchung notwendige Größe begrenzt wird. Außerhalb der begrenzenden Öffnung wird das Präparationsbauteil durch das Stütz- und Abdeckelement unterstützt, so daß eine möglichst schwingungsfreie Lagerung der Meßprobe gefördert wird. Insbesondere wird eine Schwingung des Präparationsbauteils in Richtung des Stütz- und Abdeckelementes minimiert oder sogar ganz unterbunden.

Bei einer Ausführungsform ist die Fläche eines als Präparationsbauteil verwendeten Deckgläschens eingeschränkt, denn eine Resonanzfrequenz des Deckgläschens, wenn es nur am Rand eingespannt ist, ist zu niedrig und schränkt somit den Regelkreis eines Rastersondenmikroskops bei der Untersuchung der Meßprobe ein. Hierbei wird bevorzugt von handelsüblichen Durchmessern des Deckgläschens ausgegangen, beispielsweise 24mm. Andere Durchmesser, die noch die Anpassung eines Objektivs für eine optische Untersuchung erlauben, sind natürlich ebenfalls möglich.

Die Resonanzfrequenz des Deckgläschens wird noch weiter gesenkt, wenn eine Wassersäule als zusätzliche Masse auf dem Deckgläschen ruht. Eine engere Fassung des Deckgläschens von beiden Seiten ist nicht vorteilhaft, da hierdurch der Zugang für die optischen Untersuchungsmethoden, insbesondere mit hochauflösenden kommerziellen Objektiven, nicht mehr möglich wäre. Eine Einschränkung der Fläche von oben ist jedoch möglich und erzielt eine genügende Stabilität. Der Grund hierfür liegt in eine Einschränkung der freien Schwingung nach oben, wodurch die Schwingung der Grundmode des Deckgläschens verhindert wird. Es kann auch eine Fassung von unten vorgesehen sein, wenn ein hinreichend dünnes Blech verwendet wird, welches dünner als ein Arbeitsabstand ist. Allerdings ist diese Ausführung relativ aufwendig und kostenintensiver.

In einer Ausführung sind drei Bauteile vorgesehen: eine Schale, die zum Beispiel mittels eines Trogs, einer Dichtung und eines Deckgläschens gebildet ist, eine Auflage und ein Temperaturelement, daß zum Beispiel heizen und kühlen kann. Es kann auch vorgesehen sein, daß das Temperaturelement nur heizt oder nur kühlt. Die Verbindungen zwischen diesen Bauteilen sind bevorzugt wie folgt ausgeführt: Die Schale als zentrales Element ist wärmeleitend mit dem Temperaturelement und wärmeisolierend mit der Auflage verbunden. Die Verbindung zwischen der Auflage und dem Temperaturelement ist wärmeisolierend. Hierdurch wird gewährleistet, daß die Auflage, die die mechanische Verbindung zum übrigen Aufbau der Meßapparatur herstellt, sich nicht nennenswert erwärmt und somit keine thermische Drift zeigt. Der unterste Teil der Schale wird von dem Deckgläschen gebildet, auf dem die Probe präpariert ist. Dieses liegt nun auf einem wärmeisolierenden Teil der Auflage. Da die Auflage nicht oder nur sehr wenig in den drei Raumrichtungen driftet, wird auch der Teil, auf dem das Deckgläschen liegt, nur sehr wenig driften. Die vertikale Drift des Deckgläschens ist somit nahezu auf die eigene thermische Ausdehnung aufgrund des Ausdehnungskoeffizienten von Glas reduziert. Eine Temperaturänderung der übrigen Schale und des Temperaturelements und eine hierdurch hervorgerufene vertikale Drift findet relativ zu den nicht driftenden Bauteilen statt und ist daher für das Deckgläschen nicht von Belang.

Eine Drift des bevorzugt als Deckgläschen ausgeführten Präparationsbauteils in der Probenebene kann bei einer Ausführung insbesondere dadurch verhindert werden, daß die Verbindung zwischen der Schale und dem Temperaturelement mittels eines Plattengelenkes ausgeführt ist. Hierdurch kann das Temperaturelement driften, ohne diese Bewegung auf den Trog und damit die gesamte Schale zu übertragen. Der Trog selbst erwärmt sich zwar auch, ist aber im wesentlichen symmetrisch zur Mittelachse und driftet daher radial zu dieser. Eine Meßprobe in der Mitte des Deckgläschens zeigt somit nur eine geringe Drift in der Probenebene. Zudem verhindert die bevorzugt aus Silikon gebildete Dichtung noch eine direkte Übertragung der Bewegung des Troges auf das Deckgläschen, so daß die Funktionalität einer schwimmenden Lagerung gebildet ist.

Die Verbindung zwischen dem Temperaturelement und der Auflage kann in einer Ausführung als ein Klappmechanismus gestaltet sein und umfaßt dann zwei Elemente, ein Scharnier und einen Schnapper. Diese sind bevorzugt schlechte Wärmeleiter. Das Scharnier und / oder der Schnapper können natürlich auch wärmeleitend sein und so zum Temperaturelement oder zur Auflage gehören. Die Wärmeisolierung muß dann über gesonderte Bauelemente stattfinden.

Der Klappmechanismus als Ausführung der Verbindung zwischen dem Heizelement und der Auflage hat den Vorteil, daß eine einfache und sichere Bedienung möglich ist. Insbesondere erlaubt sie die rasche Entfernung der Teile, aus denen die Schale gebildet wird. Diese kommen nämlich mit Flüssigkeit, zum Beispiel physiologischem Puffer, in Berührung und müssen deshalb für eine Reinigung oder einen Austausch aus dem Aufbau entfernbar sein. Ein weiterer Vorteil des Klappmechanismus besteht darin, daß ein Temperatursensor beim Herunterklappen in die Flüssigkeit getaucht werden kann. Der Sensor wird somit immer genau an dieselbe Stelle gebracht und es ist sicher, daß er zum Beispiel nicht die Wand der Schale berührt. Diese Fehlfunktion wäre dann zu erwarten, wenn der Benutzer selbst den Temperatursensor jeweils nach einem Zusammenbau anbringen müßte. Mittels der genauen Positionierung kann außerdem eine genauere Regelung zum Beispiel über eine Kalibrierung implementiert werden.

### Bevorzugte Ausführungsbeispiele der Erfindung

Die Erfindung wird im folgenden anhand von Ausführungsbeispielen unter Bezugnahme auf
Figuren einer Zeichnung näher erläutert. Hierbei zeigen:
   - Fig. 1: eine Vorrichtung zum Aufnehmen einer Meßprobe im Querschnitt;
   - Fig. 2: eine schematische Darstellung zur Erläuterung einer erreichten Driftminimierung;
   - Fig. 3: eine weitere Vorrichtung zum Aufnehmen einer Meßprobe mit einem Klappmechanismus im Querschnitt; und
   - Fig. 4: die Vorrichtung zum Aufnehmen einer Meßprobe nach Fig. 3, wobei der Klappmechanismus heruntergeklappt ist.

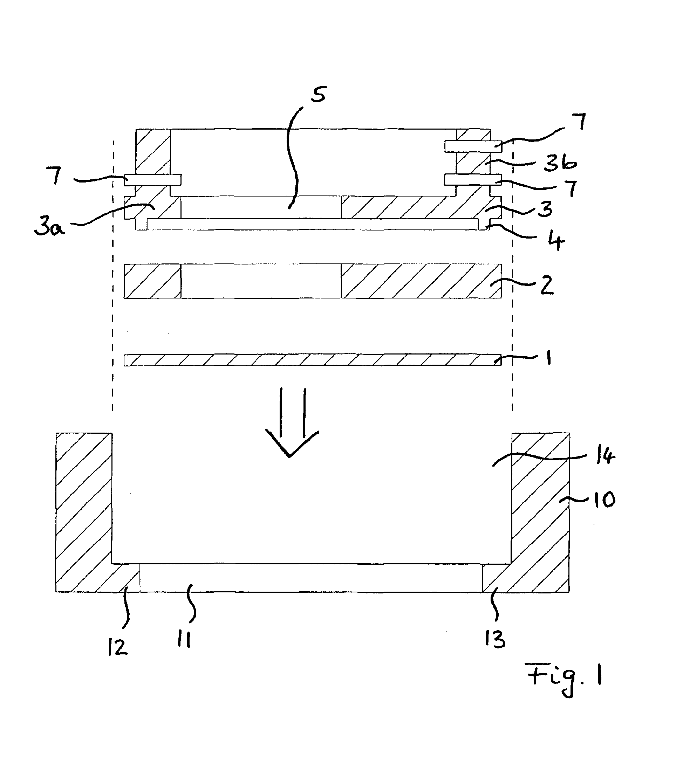

Fig. 1 zeigt Bauteile einer Vorrichtung zum Aufnehmen einer Meßprobe im Querschnitt. Die Vorrichtung wird zum Untersuchen der Meßprobe in eine Meßapparatur, insbesondere ein Rastersondenmikroskop, integriert und ermöglicht das Vermessen der Meßprobe mittels verschiedener Meßverfahren. Gemäß Fig. 1 wird ein als Deckgläschen 1 ausgeführtes Präparationsbauteil auf einer Auflage 10 angeordnet. Die Auflage 10 weist eine Auflagenöffnung 11 auf, die von Auflageabschnitten 12, 13 begrenzt wird.

Bei dem Deckgläschen 1 handelt es sich bevorzugt um einen kommerziell verfügbaren Artikel. Das Deckgläschen 1 formt zusammen mit einer Dichtung 2, die zum Beispiel aus Silikon ist, und einem Trog 3 eine Schale, die als Flüssigkeitsmeßzelle bezeichnet werden kann und in die ein flüssiges Medium, welches die Meßprobe selbst bildet oder diese zumindest teilweise umgibt, eingefüllt werden kann, beispielsweise ein Puffer. Die Dichtung 2 und der Trog 3 sind hierfür jeweils mit einer Öffnung 5 versehen, die vorzugsweise mit gleicher Größe ausgeführt sind.

Der Trog 3 weist ein das Deckgläschen 1 stützendes / abdeckendes Bodenteil 3a und eine Gefäßwand 3b auf und ist bevorzugt aus rostfreiem Stahl, kann aber auch aus einem anderen wärmeleitenden Material wie zum Beispiel Tantal sein. Mit Hilfe der Gefäßwand 3b wird ein in der Öffnung 5 gebildeter Raum zur Aufnahme einer Meßprobe erweitert. Es kann auch vorgesehen sein, den Trog 3 aus mehreren Materialien zu bilden, wenn zum Beispiel gefordert wird, daß der mit der Flüssigkeit in Berührung kommende Teil zum Beispiel aus Teflon sein soll. Es können dann innen Teflon und außen Stahl verwendet werden. Wenn nur Teflon verwendet wird, ist keine geeignete Temperaturregelung möglich.

Eine Abdichtung erfolgt, indem der Trog 3 mit einem im Bereich des Bodenteils 3a gebildeten Ansatz 4 gegen die Dichtung 2 gedrückt wird. Prinzipiell ist es möglich, den Trog 3 als dünnen Hohlzylinder auszuführen, allerdings ist eine wesentlich höhere Stabilität des Rastersondenmikroskops zu erreichen, wenn die Öffnung 5 im Bodenteil 3a des Trogs 3 derart minimiert ist, daß entlang eines hierdurch verlaufenden Meßweges eine Annäherung des Rastersondenmikroskops von oben erlaubt ist und ein sinnvoller Bereich für die Verschiebung der Meßprobe zur Verfügung steht.

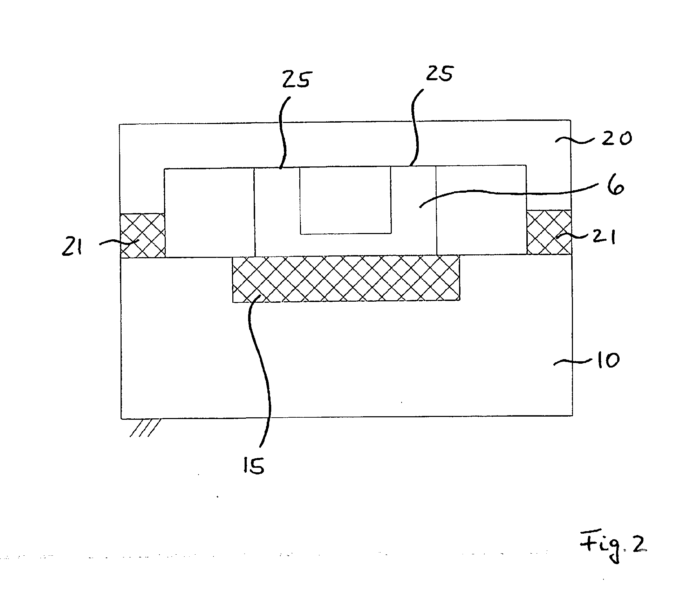

Der Trog 3 weist im Bereich der Gefäßwand 3b Röhrchen 7, über die eine Fluidaustausch stattfinden kann. Die Höhe einer Vertiefung 14 in der Auflage 10 ist zweckmäßig so bestimmt, daß alle drei Bauteile der Vorrichtung von einer umlaufenden Seitenwand der Vertiefung 14 umfaßt werden, so daß sie beim Zusammenbau nicht seitlich verrutschen können. Die drei Bauteile, nämlich das Deckgläschen 1, die Dichtung 2 und der Trog 3, bilden eine Schale 6 (vgl. Fig. 2).

Eine zu untersuchende Meßprobe (nicht dargestellt) wird zum Vermessen auf dem Präparationsbauteil 1 im Bereich der Öffnung 5 angeordnet und ist so von oben und von unten für unterschiedliche Meßverfahren zugänglich.

Fig. 2 zeigt eine schematische Darstellung von der Seite mit der Vorrichtung nach Fig. 1, wobei nur Elemente dargestellt sind, die zur Erläuterung einer erreichten Driftminimierung notwendig sind. Auf der Auflage 10 steht die Schale 6. Zumindest ein Teil 15 der Auflage 10 ist aus einem wärmeisolierendem Material. Es kann auch die gesamte Auflage 10 wärmeisolierend sein; allerdings ist dies üblicherweise aufwendiger von der Fertigung und in den Materialkosten. Ein Temperaturelement 20 zum Heizen und / oder Kühlen der Meßprobe ist mit der Auflage 10 ebenfalls über wärmeisolierende Bauteile 21 verbunden. Eine Verbindung 25 zwischen dem Temperaturelement 20 und der Schale 6 ist eine gut wärmeleitende Verbindung, die zum Beispiel als Plattengelenk ausgeführt sein kann.

Um eine gute wärmeleitende Verbindung zu gewährleisten, kann der Aufbau konstruktiv so gelöst sein, daß eine ausreichender Druck von dem Temperaturelement 20 auf die Schale 6 ausgeübt wird. Dies wird dadurch gewährleistet, daß die Dichtung 2 zusammengepreßt wird und somit als Federelement wirkt. Mittels des Drucks auf die Dichtung 2 wird auch die in Verbindung mit den Erläuterungen zu Fig. 1 angesprochene Dichtigkeit erreicht.

Wie schon oben beschrieben, bleibt aufgrund dieser Anordnung die Auflage 10 im wesentlichen auf Raumtemperatur, da sie thermisch entkoppelt ist. Die Oberfläche, auf der die Schale 6 aufliegt, driftet somit in keiner Raumrichtung. Das Deckgläschen 1, das als unterster Teil der Schale 6 im mechanischen Kontakt mit der Auflage 10 ist, driftet somit in der vertikalen Richtung nur soviel, wie es der thermische Ausdehnungskoeffizient von Glas und die Dicke des Glases erlaubt. Die Drift in der Probenebene wird, wie schon oben beschrieben, im wesentlichen durch das Plattengelenk minimiert, da eine Bewegung des Temperaturelements 20 in möglichst geringem Umfang auf die Schale 6 übertragen wird.

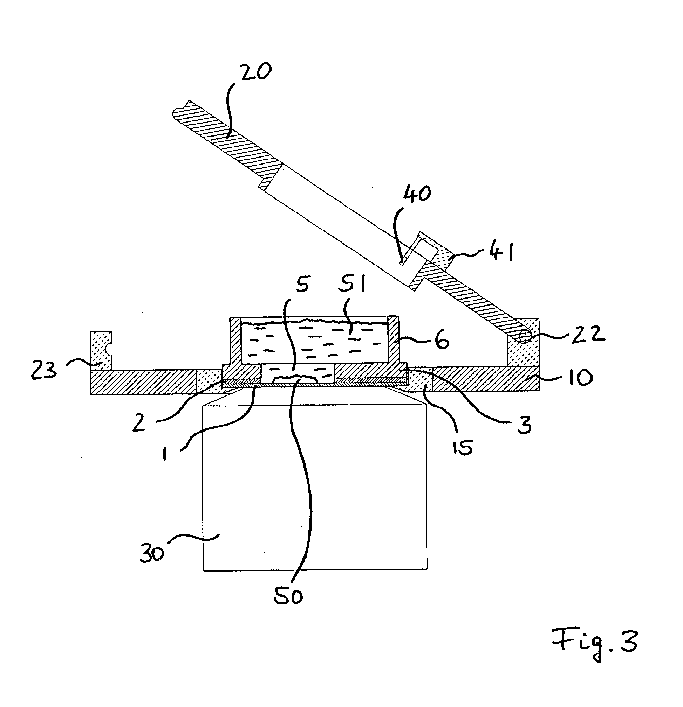

Fig. 3 zeigt eine weitere Vorrichtung zum Aufnehmen einer Meßprobe im Querschnitt, bei dem die Verbindung zwischen dem Temperaturelement 20 und der Auflage 10 als Klappmechanismus gestaltet ist. Ein Scharnier 22 und ein Schnapper 23 entsprechen hierbei den wärmeisolierenden Bauteilen 21 aus Fig. 2. Der wärmeisolierende Teil 15 der Auflage 10 ist mit der Auflage 10 zum Beispiel über eine Klebung verbunden und ist so geformt, daß der Zugang zu der Meßprobe für ein Objektiv 30 entlang eines weiteren Meßweges auf der Unterseite der Schale 6 möglich ist. Mit Hilfe des Objektivs 30 ist in Ergänzung zu einer von oben durchführbaren rastersondenmikroskopischen Untersuchung eine optische Untersuchung der Meßprobe auf dem Deckgläschen 1 ermöglicht (vgl. Fig. 1).

An dem Klappmechanismus ist ein Temperatursensor 40 angebracht, der beim Herunterklappen in die Flüssigkeit mit der Meßprobe eintaucht. Es können ergänzend oder alternativ andere Sensoren angebracht sein wie zum Beispiel die Messung des pH-Wertes. Es kann vorgesehen sein, mehrere Sensoren gleichzeitig anzubringen. Der Temperatursensor 40 ist über ein wärmeisolierendes Bauteil 41 mit dem restlichen Aufbau verbunden, so daß es nicht zu Verfälschungen des Meßergebnisses kommt. Der Übersicht halber sind in Fig. 3 auch das Deckgläschen 1 mit einer Meßprobe 50 und einem flüssigen Medium 51 gezeigt.

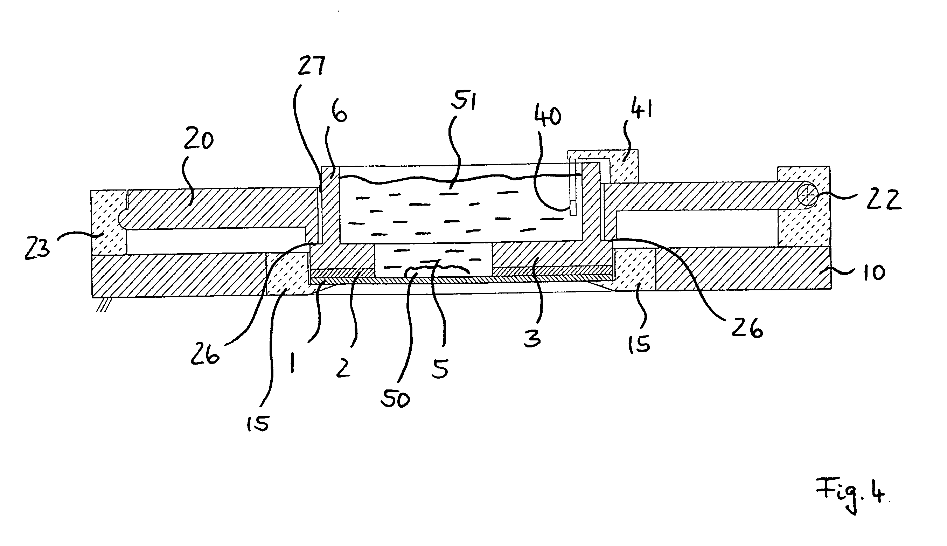

Fig. 4 zeigt die weitere Vorrichtung zum Aufnehmen einer Meßprobe nach Fig. 3, wobei das Temperaturelement 20 heruntergeklappt ist. Der Druck auf die Schale 6 wird in diesem Ausführungsbeispiel über das Zusammenpressen der Dichtung 2 ausgeübt. Hierzu ist das Scharnier so ausgebildet, daß das Temperaturelement 20 schon vor dem Einschnappen an einer Fläche 26 die Schale 6 berührt und beim Einschnappen die Dichtung 2 zusammenpreßt. Die Fläche 26 formt somit das oben genannte Plattengelenk, daß eine Bewegung der Schale 6 nur in der vertikalen Richtung beschränkt. Dies ist dann gewährleistet, wenn ein Abstand 27, der die Differenz der unterschiedlichen Radien darstellt, größer ist als alle zu erwartenden Driftstrecken. Der Temperatursensor 40 taucht nun in das flüssige Medium 51 ein.

Die in der vorstehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung zum Aufnehmen einer Meßprobe, insbesondere Probenhalter, für eine kombinierte Untersuchung der Meßprobe mit einem Meßverfahren und einem anderen Meßverfahren, welches von dem Meßverfahren verschieden ist, mit:
- einem flächigen Präparationsbauteil (1) aus einem transparenten Material mit einer Präparationsfläche, auf die die Meßprobe aufpräparierbar ist, wobei auf einer Seite des Präparationsbauteils (1) ein Meßweg zum Heranführen einer das Meßverfahren ausführenden Meßeinrichtung und auf einer gegenüberliegenden Seite des Präparationsbauteils (1) ein anderer Meßweg zum Heranführen einer das andere Meßverfahren ausführenden anderen Meßeinrichtung, nämlich ein optischer Meßweg zum Heranführen einer optischen Meßeinrichtung (30), gebildet sind,
- ein Trog (3) mit einem Stütz- und Abdeckelement (3a), welches auf der einen Seite gegen das Präparationsbauteil (1) gedrückt ist und eine die Präparationsfläche umgebende Öffnung (5) aufweist, durch die hindurch der Meßweg gebildet ist, wobei mittels der Öffnung (5) des Stütz- und Abdeckelementes (3a) eine verminderte Präparationsfläche gebildet ist, die von der Öffnung (5) begrenzt ist, und
- einem Auflagebauteil (10), auf dem das Präparationsbauteil (1) gelagert ist und das eine Ausnehmung (11) mit einer Ausnehmungsfläche aufweist, die größer als eine Öffnungsfläche der Öffnung (5) ist,
wobei zwischen dem Präparationsbauteil (1) und dem Stütz- und Abdeckelement (3a) ein Dichtungselement (2) angeordnet ist, um das Präparationsbauteil (1) und das Stütz- und Abdeckelement (3a) fluiddicht zu verbinden.

2. Vorrichtung nach Anspruch 1, **dadurch gekennzeichnet, daß** in der Öffnung (5) des Stütz- und Abdeckelementes (3a) ein Probeaufnahmeraum gebildet ist.

3. Vorrichtung nach Anspruch 1 oder 2, **dadurch gekennzeichnet, daß** in dem Dichtungselement (2) eine Dichtungsöffnung mit einem Durchmesser gebildet ist, der im wesentlichen gleich dem Durchmesser der Öffnung in dem Stütz- und Abdeckelement (3a) ist, wobei die Öffnung und die Dichtungsöffnung überlappend angeordnet sind.

4. Vorrichtung nach einem der vorangehenden Ansprüche, **dadurch gekennzeichnet, daß** das Präparationsbauteil (1) und das Stütz- und Abdeckelement (3a) mittels des Dichtungselementes (2) thermisch entkoppelt sind.

5. Vorrichtung nach einem der vorangehenden Ansprüche, **dadurch gekennzeichnet, daß** auf dem Stütz- und Abdeckelement (3a) eine umlaufende Gefäßwand (3b) angeordnet ist, die einen erweiterten Probeaufnahmeraum umgibt.

6. Vorrichtung nach Anspruch 5, **dadurch gekennzeichnet, daß** in der Gefäßwand (3b) ein oder mehrere Zuführungen (7) zum Einbringen / Abführen eines Fluids in / aus dem erweiterten Probeaufnahmeraum gebildet sind.

7. Vorrichtung nach Anspruch 5 oder 6, **dadurch gekennzeichnet, daß** die Gefäßwand (3b) einstückig mit dem Stütz- und Abdeckelement (3a) ausgeführt ist, wobei mit dem Stütz- und Abdeckelement (3a) ein Bodenteil gebildet ist.

8. Vorrichtung nach einem der Ansprüche 4 bis 6, **dadurch gekennzeichnet, daß** das Stütz- und Abdeckelement (3a) und / oder die Gefäßwand (3b) zumindest auf einer dem erweiterten Probeaufnahmeraum zugewandten Oberfläche eine Beschichtung aufweisen.

9. Vorrichtung nach einem der Ansprüche 5 bis 8, **dadurch gekennzeichnet, daß** mit dem Präparationsbauteil (1), dem Stütz- und Abdeckelement (3a) und der Gefäßwand (3b) eine Meßzelle mit dem erweiterten Probeaufnahmeraum gebildet ist.

10. Vorrichtung nach einem der vorangehenden Ansprüche, **dadurch gekennzeichnet, daß** das Präparationsbauteil (1) aus einem Glasmaterial oder einem transparenten Kunststoffmaterial ist.

11. Vorrichtung nach Anspruch 10, **dadurch gekennzeichnet, daß** das Präparationsbauteil (1) ein Deckgläschen mit standardisierten Abmessungen ist.

12. Vorrichtung nach Anspruch 11, **dadurch gekennzeichnet, daß** das Auflagebauteil (10) zumindest in einem Abschnitt (15), in welchem das Präparationsbauteil (1) zur Auflage kommt, aus einem wärmeisolierenden Material ist.

13. Vorrichtung nach Anspruch 11 oder 12, **dadurch gekennzeichnet, daß** in dem Auflagebauteil (10) eine Vertiefung (14) zur Aufnahme des Präparationsbauteils (1) und des Stütz- und Abdeckelementes (3a) und wahlweise der Gefäßwand (3b) gebildet ist.

14. Vorrichtung nach einem der vorangehenden Ansprüche, **dadurch gekennzeichnet, daß** das Präparationsbauteil (1) und / oder die Gefäßwand (3b) an ein Temperaturelement (20) zum Heizen und / oder Kühlen der Meßprobe thermisch gekoppelt sind.

15. Vorrichtung nach einem der vorangehenden Ansprüche, soweit bezüglich der Gefäßwand (3b) auf Anspruch 6 rückbezogen, **dadurch gekennzeichnet, daß** das Präparationsbauteil (1) und / oder die Gefäßwand (3b) mittels einer schwenkbaren Halterung an dem Auflagebauteil (10) fixiert sind, die zwischen einer geöffneten Stellung und einer geschlossenen Stellung schwenkbar ist.

16. Vorrichtung nach Anspruch 15, **dadurch gekennzeichnet, daß** die Halterung in der geschlossenen Stellung mittels eines Schnappverschlusses gehalten wird.

17. Vorrichtung nach Anspruch 15 oder 16, **dadurch gekennzeichnet, daß** an der Halterung ein oder mehrere Sensoreinrichtungen (40) angeordnet sind, mit denen in der geschlossenen Stellung Meßbedingungen in dem Probenraum / erweiterten Probenraum erfaßbar sind.

18. Vorrichtung nach Anspruch 17, **dadurch gekennzeichnet, daß** die eine oder alle Sensoreinrichtungen (40) von der Halterung, der Gefäßwand (3b) und / oder dem Stützund Abdeckbauteil (3a) thermisch entkoppelt sind.

19. Vorrichtung nach Anspruch 14 und einem der Ansprüche 15 bis 18, dadurch **gekenn- zeichnet**, daß das Temperaturelement (20) in die Halterung integriert ist und in der geschlossenen Stellung an das Präparationsbauteil (1) und / oder die Gefäßwand (3b) thermisch gekoppelt ist.

20. Vorrichtung nach Anspruch 14 oder 19, **dadurch gekennzeichnet, daß** das Temperaturelement (20) mittels eines Plattengelenkes an das Präparationsbauteil (1) und / oder die Gefäßwand (3b) thermisch gekoppelt ist.

21. Vorrichtung nach einem der vorangehenden Ansprüche, **dadurch gekennzeichnet, daß** der Meßweg ein Rastersondenmikroskop-Meßweg ist zum Heranführen eines Rastersondenmikroskops ist.

## Claims

1. A device for receiving a test sample, particularly sample holders, for combined examination of the test sample by a test procedure and another test procedure which differs from the first test procedure, comprising:
- a planar preparation component (1) in a transparent material with a preparation surface on which a test sample may be prepared, wherein a test path for the introduction of a test facility for carrying out the test procedure is formed on one side of the preparation component (1) and another test path for the introduction of a test facility for carrying out the other test procedure on the test sample is formed on an opposite side of the preparation component (1), wherein the other test path is an optical test path for the introduction of an optical test apparatus (30),
- a trough with a supporting and covering element (3a) which is pressed against the preparation component (1) on one side and which has an aperture (5) encompassing the preparation surface and through which the test path is formed, wherein a reduced preparation surface is formed by the aperture (5) of the supporting and covering element (3a), which preparation surface is demarcated by the aperture,
- a supporting component (10) on which the preparation component (1) is located on, which has a recess (11) with a surface area which is larger than that of the aperture (5)
wherein a sealing element (2) is arranged between the preparation component (1) and the supporting and covering element (3a), to make a fluid-tight connection between the preparation component (1) and the supporting and covering element (3a).

2. The device in accordance with claim 1, wherein a sample receiving chamber is formed in the aperture (5) of the supporting and covering element (3a).

3. The device in accordance with claim 1 or 2, wherein a sealing aperture is formed in the sealing element (2), which has a diameter which is essentially equal to the diameter of the aperture in the supporting and covering element (3a), the aperture and the sealing aperture being arranged to overlap.

4. The device in accordance with one of the preceding claims, wherein the preparation component (1) and the supporting and covering element (3a) are thermally decoupled by the sealing element (2).

5. The device in accordance with one of the preceding claims, wherein a surrounding vessel wall (3b) is arranged on the supporting and covering element (3a) which encompasses an extended sample receiving chamber.

6. The device in accordance with claim 5, wherein one or more feed lines (7) for introducing and removing a liquid to and from the extended sample receiving chamber are formed in the vessel wall (3b).

7. The device in accordance with claim 5 or 6, wherein the vessel wall (7) is formed in one piece with the supporting and covering element (3a), forming a base component with the supporting and covering element (3a).

8. The device in accordance with one of the claims 4 to 6, wherein at least one of the supporting and covering element (3a) and the vessel wall (3b) have a coating, at least on the surface facing the extended sample receiving chamber.

9. The device in accordance with one of the claims 5 to 8, wherein the preparation component (1), the supporting and covering element (3a) and the vessel wall (3b) form a measurement cell with the extended sample receiving chamber.

10. The device in accordance with one of the preceding claims, wherein the preparation component (1) is made of at least one of a glass and a transparent plastic material.

11. The device in accordance with claim 10, wherein the preparation component (1) is a cover slip with standardized dimensions.

12. The device in accordance with claim 11, wherein the support is in a heat-insulating material, at least one section in which the preparation component is used for support.

13. The device in accordance with claim 11 or 12, wherein a depression for receiving the preparation component (1) and the supporting and covering element (3 a), and optionally the wall of the vessel (3b), is formed in the support (10).

14. The device in accordance with one of the preceding claims, wherein at least one of the preparation component (1) and the wall of the vessel (3b) are thermally coupled to a temperature element for at least one of heating and cooling the test sample.

15. The device in accordance with one of the preceding claims as long as referenced to claim 6 in connection with the vessel wall (3b), wherein at least one of the preparation component (1) and the wall of the vessel are retained by a swiveling holder, which can be swiveled between and open position and a closed position.

16. The device in accordance with claim 15, wherein the holder is retained by a catch in its closed position.

17. The device in accordance with claim 15 or 16, wherein at least one sensing apparatus (40) is arranged to the holder, with which test conditions in the sample chamber / extended sample receiving chamber can be detected in the closed position.

18. The device in accordance with claim 17, wherein at least one sensing apparatus is at least one of thermally decoupled from the holder, the vessel wall (3b) and the supporting and covering component (3a).

19. The device in accordance with claim 14 and one of the claims 15 to 18, wherein the temperature element (20) is integrated into the swiveling holder and is thermally coupled to at least one of the preparation component (1) and the vessel wall (3b) in the closed position.

20. The device in accordance with claim 14 or 19, wherein the temperature element (20) is thermally coupled to at least one of the preparation component (1) and the vessel wall (3b) by means of a turning and sliding joint.

21. The device in accordance with one of the preceding claims, wherein the test path is a scanning probe microscope test path for the introduction of a scanning probe microscope.

## Revendications

1. Dispositif destiné à recevoir un prélèvement, en particulier porte-échantillon, pour analyse combinée de l'échantillon par un procédé de mesure et un autre procédé de mesure qui est différent de ce procédé de mesure, comportant :
- une pièce de préparation plane (1) faite d'un matériau transparent ayant une surface de préparation sur laquelle l'échantillon peut être préparé, un parcours de mesure étant constitué sur une face de la pièce de préparation (1) pour approcher un dispositif de mesure réalisant le procédé de mesure et un autre parcours de mesure sur une face opposée de la pièce de préparation (1) pour approcher un dispositif de mesure réalisant l'autre procédé de mesure, à savoir un parcours de mesure optique permettant d'approcher un dispositif optique (30) de mesure,
- une cuvette (3) dotée d'un élément de support et de recouvrement (3a), qui est poussée par un côté contre la pièce de préparation (1) et présente une ouverture (5) entourant la surface de préparation et à travers laquelle le parcours de mesure est constitué, étant formée au moyen de l'ouverture (5) de l'élément de support et de recouvrement (3a) une surface de préparation réduite qui est limitée par l'ouverture (5) et
- une pièce d'appui (10) sur laquelle la pièce de préparation (1) s'appuie et qui présente un évidement (11) ayant une surface d'évidement qui est supérieure à une surface d'ouverture de l'ouverture (5),
un élément d'étanchéité (2) étant disposé entre la pièce de préparation (1) et l'élément de support et de recouvrement (3a) pour raccorder la pièce de préparation (1) et l'élément de support et de recouvrement (3a) de manière étanche au fluide.

2. Dispositif selon la revendication 1, **caractérisé en ce qu'**un espace récepteur d'échantillon est constitué dans l'ouverture (5) de l'élément de support et de recouvrement (3 a).

3. Dispositif selon la revendication 1 ou 2, **caractérisé en ce que**, dans l'élément d'étanchéité (2), est pratiquée une ouverture d'étanchéité ayant un diamètre qui est sensiblement égal au diamètre de l'ouverture de l'élément de support et de recouvrement (3a), l'ouverture et l'ouverture d'étanchéité étant disposées en chevauchement.

4. Dispositif selon une des revendications précédentes, **caractérisé en ce que** la pièce de préparation (1) et l'élément de support et de recouvrement (3a) sont désaccouplés au niveau thermique à l'aide de l'élément d'étanchéité (2).

5. Dispositif selon une des revendications précédentes, **caractérisé en ce que**, sur l'élément de support et de recouvrement (3a), est disposée une paroi de récipient (3b) qui entoure un espace récepteur d'échantillon élargi.

6. Dispositif selon la revendication 5, **caractérisé en ce que**, dans la paroi du récipient (3b), sont formées une ou plusieurs alimentations (7) permettant d'introduire/évacuer un fluide dans/hors de l'espace récepteur d'échantillon élargi.

7. Dispositif selon la revendication 5 ou 6, **caractérisé en ce que** la paroi du récipient (3b) est réalisée en un bloc avec l'élément de support et de recouvrement (3a), une partie fond étant formée par l'élément de support et de recouvrement (3a).

8. Dispositif selon une des revendications 4 à 6, **caractérisé en ce que** l'élément de support et de recouvrement (3a) et/ou la paroi de récipient (3b) présentent un revêtement au moins sur une surface tournée vers l'espace récepteur d'échantillon élargi.

9. Dispositif selon une des revendications 5 à 8, **caractérisé en ce qu'**est formée avec la pièce de préparation (1), l'élément de support et de recouvrement (3a) et la paroi de récipient (3b) une cellule de mesure comprenant l'espace récepteur d'échantillon élargi.

10. Dispositif selon une des revendications précédentes, **caractérisé en ce que** la pièce de préparation (1) est faite d'un matériau de verre ou d'une matière plastique transparente.

11. Dispositif selon la revendication 10, **caractérisé en ce que** la pièce de préparation (1) est un godet de recouvrement à dimensions standardisées.

12. Dispositif selon la revendication 11, **caractérisé en ce que** la pièce d'appui (10), du moins dans une section (15) dans laquelle la pièce de préparation (1) vient s'appuyer, est faite d'un matériau d'isolation thermique.

13. Dispositif selon la revendication 11 ou 12, **caractérisé en ce que**, dans la pièce d'appui (10), est formé un creux (14) destiné à recevoir la pièce de préparation (1) et l'élément de support et de recouvrement (3a) et facultativement la paroi de récipient (3b).

14. Dispositif selon une des revendications précédentes, **caractérisé en ce que** la pièce de préparation (1) et/ou la paroi de récipient (3b) sont couplées au niveau thermique à un élément de température (20) permettant de chauffer et/ou refroidir l'échantillon.

15. Dispositif selon une des revendications précédentes, dans la mesure où il est fait référence à la revendication 6 concernant la paroi de récipient (3b), **caractérisé en ce que** la pièce de préparation (1) et/ou la paroi de récipient (3b) sont fixées au moyen d'une fixation pivotante à la pièce d'appui (10) qui peut pivoter entre une position ouverte et une position fermée.

16. Dispositif selon la revendication 15, **caractérisé en ce que** la fixation est maintenue dans la position fermée au moyen d'une fermeture à déclic.

17. Dispositif selon la revendication 15 ou 16, **caractérisé en ce que** sont disposés au niveau de la fixation un ou plusieurs dispositifs de détection (40) qui, en position fermée, permettent de détecter les conditions de mesure dans la cellule à échantillons/la cellule à échantillons élargie.

18. Dispositif selon la revendication 17, **caractérisé en ce qu'**un dispositif de détection ou tous (40) sont désaccouplés au niveau thermique de la fixation, de la paroi de récipient (3b) et/ou de l'élément de support et de recouvrement (3a).

19. Dispositif selon la revendication 14 et une des revendications 15 à 18, **caractérisé en ce que** l'élément de température (20) est intégré dans la fixation et est, en position fermée, couplé à la pièce de préparation (1) et/ou à la paroi de récipient (3b).

20. Dispositif selon la revendication 14 ou 19, **caractérisé en ce que** l'élément de température (20) est couplé au niveau thermique au moyen d'une articulation à plateau à la pièce de préparation (1) et/ou à la paroi de récipient (3b).

21. Dispositif selon une des revendications précédentes, **caractérisé en ce que** le parcours de mesure est un parcours de mesure de microscope à sonde de balayage de trame permettant d'approcher un microscope à sonde de balayage de trame.
